# EUROPEAN PATENT APPLICATION

(11) **EP 4 699 886 A1**
(43) Date of publication of application: **25.02.2026**
(21) Application number: 23933278.6
(22) Date of filing: 18.04.2023
(51) Int. Cl.: B60W 50/06, B62D 6/00

(54) **VEHICLE CONTROL SYSTEM, INTEGRATED CONTROL PROGRAM, AND VEHICLE STEERING SYSTEM**

(71) Applicant: JTEKT CORPORATION, Kariya-shi, Aichi 448-8652 (JP)
(72) Inventor: INDEN Yuki, Kariya-shi, Aichi 448-8652 (JP); ITAMOTO Hidenori, Kariya-shi, Aichi 448-8652 (JP); TAMAIZUMI Terutaka, Kariya-shi, Aichi 448-8652 (JP)
(74) Representative: Winter, Brandl - Partnerschaft mbB
(86) International application number: PCT/JP2023/015449
(87) International publication number: WO 2024/218853

(57) **Abstract**

A vehicle control system (CCS) controls a plurality of vehicle systems (CS) including a vehicle steering system (STG). A first control process to be executed by an integrated control device (10) is a process of calculating a steering control value (θp*, Ts*) to be used by a steering control device (20) to control the vehicle steering system (STG), and is a process using a control parameter set in association with a behavior of a vehicle (VC). A second control process to be executed by the steering control device (20) is a process of controlling the vehicle steering system (STG) to reflect the steering control value (θp*, Ts*) calculated by the integrated control device (10), and is a process using a control parameter set in association with a behavior of the vehicle steering system (STG).

## Description

### TECHNICAL FIELD

The present disclosure relates to a vehicle control system, an integrated control program, and a vehicle steering system.

### BACKGROUND ART

For example, Patent Document 1 describes a vehicle control system including a command controller that centrally executes control related to the traveling condition of the vehicle. Such a vehicle control system includes, in addition to the command controller, a plurality of actuator controllers that individually executes control related to the traveling condition of the vehicle. The control related to the traveling condition of the vehicle includes control for generating a driving force, a steering force, and a braking force of the vehicle. The command controller generates a control target value for each control related to the traveling condition of the vehicle. The generated control target value is transmitted to the corresponding actuator controller and used to control the driving of an actuator by the actuator controller.

### Related Art Documents

### Patent Documents

Patent Document 1: Japanese Unexamined Patent Application Publication No. 2013-230812 (JP 2013-230812 A)

### SUMMARY OF THE INVENTION

### Problem to be Solved by the Invention

In a vehicle to which the above vehicle control system is applied, when adjusting the behavior of the vehicle, it is necessary to adjust control parameters in each of the command controller and the actuator controller. The same applies to adjustment of the behavior of the actuator. Therefore, the work related to the adjustment of the behaviors of the vehicle and the actuator is complicated. This causes a decrease in degree of freedom in designing the vehicle control system. Thus, improvement is desired from the viewpoint of facilitating the work related to the adjustment of the behaviors of the vehicle and the actuator.

### Means for Solving the Problem

One aspect of the present disclosure provides a vehicle control system configured to control a plurality of vehicle systems including a vehicle steering system for steering a vehicle. The vehicle control system includes: an integrated control device that centrally controls the plurality of vehicle systems; and a steering control device that controls the vehicle steering system. Processes of controlling the vehicle steering system include a first control process and a second control process. The integrated control device is configured to execute the first control process. The steering control device is configured to execute the second control process. The first control process is a process of calculating a steering control value to be used by the steering control device to control the vehicle steering system, and is a process using a control parameter set in association with a behavior of the vehicle. The second control process is a process of controlling the vehicle steering system to reflect the steering control value calculated by the integrated control device, and is a process using a control parameter set in association with a behavior of the vehicle steering system.

Another aspect of the present disclosure provides an integrated control program to be applied to a vehicle control system including an integrated control device that centrally controls a plurality of vehicle systems including a vehicle steering system for steering a vehicle, and a steering control device that controls the vehicle steering system. Processes of controlling the vehicle steering system include a first control process to be executed by the integrated control device and a second control process to be executed by the steering control device. The integrated control program is configured to cause the integrated control device to execute the first control process. The first control process is a process of calculating a steering control value to be used by the steering control device to control the vehicle steering system, and is a process using a control parameter set in association with a behavior of the vehicle.

Another aspect of the present disclosure provides a vehicle steering system for steering a vehicle. The vehicle steering system is applied to a vehicle control system including an integrated control device that centrally controls a plurality of vehicle systems. The vehicle steering system includes a steering control device that controls the vehicle steering system. Processes of controlling the vehicle steering system include a first control process to be executed by the integrated control device and a second control process to be executed by the steering control device. The first control process is a process of calculating a steering control value to be used by the steering control device to control the vehicle steering system, and is a process using a control parameter set in association with a behavior of the vehicle. The second control process is a process of controlling the vehicle steering system to reflect the steering control value calculated by the integrated control device, and is a process using a control parameter set in association with a behavior of the vehicle steering system.

### BRIEF DESCRIPTION OF THE DRAWINGS

[FIG. 1] is a diagram showing the configuration of a vehicle control system according to a first embodiment.
[FIG. 2] is a diagram showing the configuration of a vehicle steering system according to the first embodiment.
[FIG. 3] is a block diagram showing processing details of an integrated control program and a steering control program in FIG. 2.
[FIG. 4] is a diagram showing assignment of processes in FIG. 3.
[FIG. 5] is a block diagram showing processing details of an integrated control program and a steering control program according to a second embodiment.

### MODES FOR CARRYING OUT THE INVENTION

### <First Embodiment>

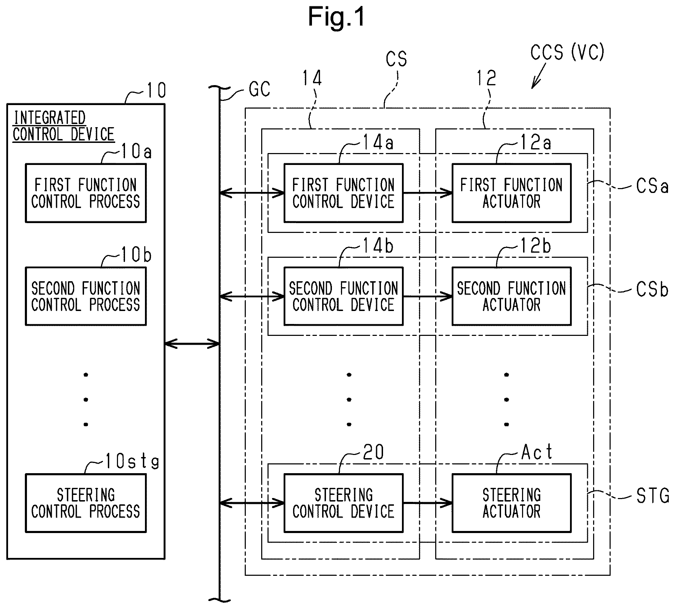

A first embodiment will be described below with reference to the drawings. As shown in FIG. 1, a vehicle control system CCS is a system mounted on a vehicle VC to execute control related to the behavior of the vehicle VC. The behavior of the vehicle VC includes, for example, the traveling condition of the vehicle VC and the steering feel when steering the vehicle VC. The vehicle control system CCS includes an integrated control device 10 and a plurality of vehicle systems CS. The integrated control device 10 and the plurality of vehicle systems CS are communicatively connected to each other via an in-vehicle network GC including lines such as a CAN. The plurality of vehicle systems CS is communicatively connected to each other via the in-vehicle network GC. The integrated control device 10 executes control for stabilizing the behavior of the vehicle VC by centrally controlling the plurality of vehicle systems CS.

The plurality of vehicle systems CS includes a vehicle steering system STG and a plurality of function systems such as a first vehicle function system CSa and a second vehicle function system CSb. The vehicle steering system STG generates, for example, a steering force related to steering of the vehicle VC to change the traveling direction of the vehicle VC. The first vehicle function system CSa generates, for example, a driving force for traveling of the vehicle VC. The second vehicle function system CSb generates, for example, a braking force for decelerating the vehicle VC.

Each of the plurality of vehicle systems CS is a combination of an actuator 12 and a control device 14 that controls the actuator 12. The vehicle steering system STG is, for example, a combination of a steering actuator Act that generates a steering force and a steering control device 20 that controls the driving of the steering actuator Act. The first vehicle function system CSa is, for example, a combination of a first function actuator 12a that generates a driving force and a first function control device 14a that controls the driving of the first function actuator 12a. The second vehicle function system CSb is, for example, a combination of a second function actuator 12b that generates a braking force and a second function control device 14b that controls the driving of the second function actuator 12b.

The integrated control device 10 is configured to execute various control processes for controlling individual systems to centrally control the plurality of vehicle systems CS. The integrated control device 10 is configured to execute, for example, a steering control process 10stg for controlling the vehicle steering system STG. The integrated control device 10 is configured to execute, for example, a first function control process 10a for controlling the first vehicle function system CSa. The integrated control device 10 is configured to execute, for example, a second function control process 10b for controlling the second vehicle function system CSb.

### <Vehicle Steering System>

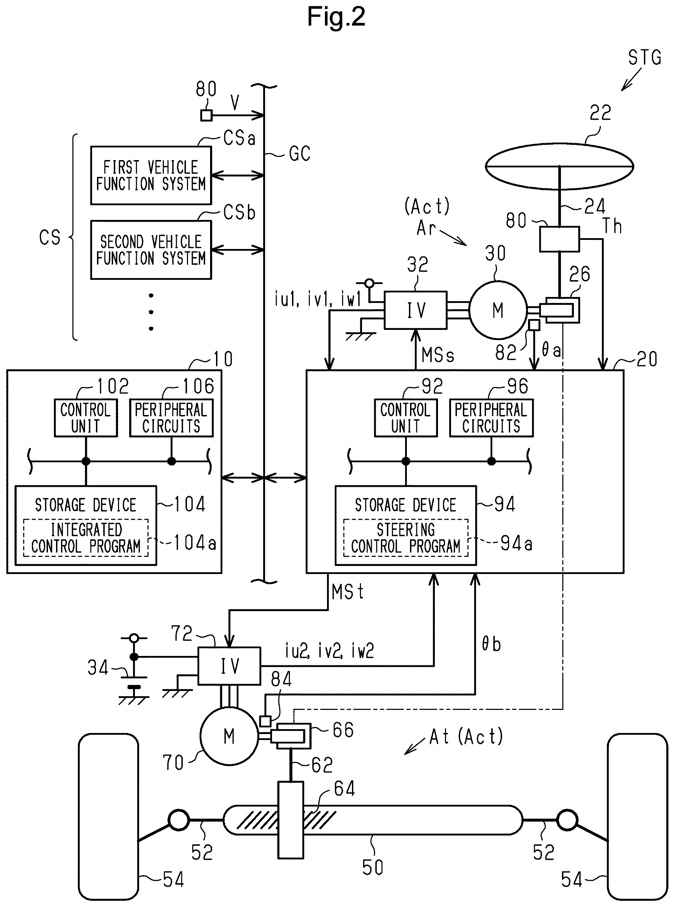

As shown in FIG. 2, the vehicle steering system STG mounted on the vehicle VC includes the steering actuator Act. The steering actuator Act includes a reaction force actuator Ar and a turning actuator At. The vehicle steering system STG has a structure in which a power transmission path between a steering wheel 22 of the vehicle VC that is an operation member and steered wheels 54 of the vehicle VC is mechanically disconnected. That is, the vehicle steering system STG includes a steer-by-wire steering device.

A steering shaft 24 is connected to the steering wheel 22. The reaction force actuator Ar is an actuator that applies a steering reaction force to the steering wheel 22. The steering reaction force refers to a force that acts in an opposite direction to a direction in which the steering wheel 22 is operated by a driver. Applying the steering reaction force to the steering wheel 22 can provide a suitable tactile feedback to the driver. The reaction force actuator Ar includes a speed reduction mechanism 26, a reaction force motor 30, and a reaction force inverter 32. In the present embodiment, the steering reaction force is an example of the steering force related to steering of the vehicle VC.

The reaction force motor 30 is a three-phase brushless motor. The reaction force motor 30 is a surface permanent magnet synchronous motor. The reaction force motor 30 is a drive source for the reaction force actuator Ar. A rotary shaft of the reaction force motor 30 is connected to the steering shaft 24 via the speed reduction mechanism 26. The reaction force inverter 32 is a power conversion circuit or a drive circuit that converts a voltage VB of a battery 34 that is a direct current voltage source to an alternating current voltage and applies the alternating current voltage to the reaction force motor 30.

A steered shaft 50 extends in a vehicle width direction that is a right-left direction in FIG. 2. The right and left steered wheels 54 are connected to both ends of the steered shaft 50 via tie rods 52. The steered angle of the steered wheels 54 is changed as the steered shaft 50 makes a linear motion.

The turning actuator At includes a speed reduction mechanism 66, a turning motor 70, and a turning inverter 72. The turning motor 70 is a three-phase brushless motor. The turning motor 70 is a drive source for the turning actuator At. A rotary shaft of the turning motor 70 is connected to a pinion shaft 62 via the speed reduction mechanism 66. Pinion teeth of the pinion shaft 62 mesh with rack teeth 64 of the steered shaft 50. The pinion shaft 62 and the steered shaft 50 with the rack teeth 64 form a rack and pinion mechanism. Torque of the turning motor 70 is applied as a turning force to the steered shaft 50 via the pinion shaft 62. The steered shaft 50 moves in the vehicle width direction that is the right-left direction in FIG. 2 in response to rotation of the turning motor 70. In the present embodiment, the turning force is an example of the steering force related to steering of the vehicle VC.

The vehicle steering system STG includes the steering control device 20. The steering control device 20 controls the steering wheel 22 that is a controlled object. The steering control device 20 controls the driving of the reaction force actuator Ar to control the steering reaction force that is a controlled variable for the controlled object. An operation signal MSs for the reaction force inverter 32 is shown in FIG. 2. The steering control device 20 controls the steered wheels 54 that are controlled objects. The steering control device 20 operates the turning actuator At to control the steered angle of the steered wheels 54 that is a controlled variable for the controlled objects. The steered angle is a turning angle of tires, that is, the steered wheels 54. An operation signal MSt for the turning inverter 72 is shown in FIG. 2.

The vehicle steering system STG is connected to the in-vehicle network GC via the steering control device 20. That is, the steering control device 20 is connected to the integrated control device 10 via the in-vehicle network GC. The steering control device 20 is connected to other vehicle systems CS such as the first vehicle function system CSa and the second vehicle function system CSb via the in-vehicle network GC.

The steering control device 20 refers to steering torque Th detected by a torque sensor 80, namely input torque to the steering shaft 24. The torque sensor 80 includes a torsion bar connected to the steering shaft 24, and a sensing element that detects a torsion angle of the torsion bar. The steering control device 20 refers to a rotation angle θa of the rotary shaft of the reaction force motor 30 detected by a rotation angle sensor 82. The steering control device 20 refers to currents iu1, iv1, iw1 flowing through the reaction force motor 30. The currents iu1, iv1, iw1 are quantified as voltage drops across shunt resistors provided in legs of the reaction force inverter 32. The steering control device 20 refers to a rotation angle θb of the rotary shaft of the turning motor 70 detected by a rotation angle sensor 84. The steering control device 20 refers to currents iu2, iv2, iw2 flowing through the turning motor 70. The currents iu2, iv2, iw2 are quantified as voltage drops across shunt resistors provided in legs of the turning inverter 72.

The steering control device 20 includes a control unit 92, a storage device 94, and peripheral circuits 96. The control unit 92 is a software processing device such as a CPU, a GPU, and a TPU. The software processing device used in the control unit 92 has, for example, a control period shorter than the communication period of the in-vehicle network GC. The storage device 94 includes a storage medium such an electrically rewritable nonvolatile memory and a disk medium. The storage device 94 stores a steering control program 94a. The peripheral circuits 96 include a circuit for generating a clock signal that regulates internal operations, a power supply circuit, and a reset circuit. The steering control device 20 controls the controlled variable by the control unit 92 executing the steering control program 94a stored in the storage device 94.

The steering control device 20 outputs a steering state variable SVstg obtained from the vehicle steering system STG to the in-vehicle network GC. The steering state variable SVstg includes the steering torque Th and the rotation angle θa referred to by the steering control device 20, and a turning torque command value Tt* described later.

The integrated control device 10 receives input of the steering state variable SVstg transmitted via the in-vehicle network GC. That is, the integrated control device 10 refers to the steering torque Th, the rotation angle θa, and the turning torque command value Tt*. The integrated control device 10 receives input of a vehicle speed V transmitted via the in-vehicle network GC. The vehicle speed V is the traveling speed of the vehicle VC detected by a vehicle speed sensor 86. The integrated control device 10 receives input of a system state variable SVcs transmitted via the in-vehicle network GC. The system state variable SVcs is a state variable obtained from a vehicle system CS other than the vehicle steering system STG. The system state variable SVcs includes a first function state variable SVa obtained from the first vehicle function system CSa, a second function state variable SVb obtained from the second vehicle function system CSb, etc. The first function state variable SVa indicates, for example, a state related to the driving of the first function actuator 12a in the first vehicle function system CSa, including an operation state of an accelerator pedal of the vehicle VC or the magnitude of the driving force being generated. The second function state variable SVb indicates, for example, a state related to the driving of the second function actuator 12b in the second vehicle function system CSb, including an operation state of a brake pedal of the vehicle VC or the magnitude of the braking force being generated.

The integrated control device 10 includes a control unit 102, a storage device 104, and peripheral circuits 106. The control unit 102 is a software processing device such as a CPU, a GPU, and a TPU. The software processing device used in the control unit 102 has, for example, a control period longer than the communication period of the in-vehicle network GC. Therefore, the control period of the control unit 92 is shorter than the control period of the control unit 102. That is, the steering control device 20 is configured to execute various processes in a shorter period than the control period in which various processes are executed by the integrated control device 10. The storage device 104 includes a storage medium such an electrically rewritable nonvolatile memory and a disk medium. The storage device 104 stores an integrated control program 104a. The peripheral circuits 106 include a circuit for generating a clock signal that regulates internal operations, a power supply circuit, and a reset circuit. The integrated control device 10 controls the controlled variable by the control unit 102 executing the integrated control program 104a stored in the storage device 104.

### <Processes for Controlling Vehicle Steering System>

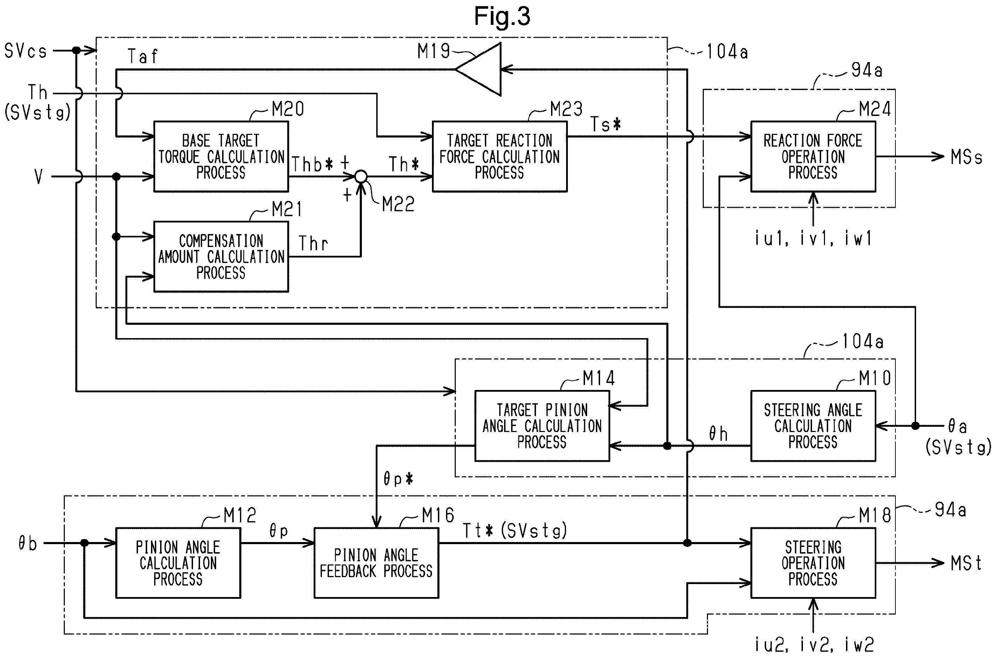

FIG. 3 shows part of the processes to be executed to control the vehicle steering system STG. A steering angle calculation process M10 is a process of calculating a steering angle θh that is a rotation angle of the steering wheel 22 using the rotation angle θa as an input. The steering angle calculation process M10 includes a process of converting the rotation angle θa to, for example, a cumulative angle including a range exceeding 360° by counting the number of revolutions of the reaction force motor 30 from a neutral steering position that is the position of the steering wheel 22 when the vehicle VC is traveling straight. The steering angle calculation process M10 includes a process of calculating the steering angle θh by multiplying the cumulative angle obtained by the conversion by a conversion factor that is based on a rotation speed ratio of the speed reduction mechanism 26. For example, the steering angle θh is positive when it is an angle to the right of the neutral steering position, and is negative when it is an angle to the left of the neutral steering position.

A pinion angle calculation process M12 is a process of calculating a pinion angle θp that is a rotation angle of the pinion shaft 62 using the rotation angle θb as an input. The pinion angle calculation process M12 includes a process of converting to, for example, a cumulative angle including a range exceeding 360° by counting the number of revolutions of the turning motor 70 from a neutral rack position that is the position of the steered shaft 50 when the vehicle VC is traveling straight. The pinion angle calculation process M12 includes a process of calculating the pinion angle θp that is an actual rotation angle of the pinion shaft 62 by multiplying the cumulative angle obtained by the conversion by a conversion factor that is based on a rotation speed ratio of the speed reduction mechanism 66. For example, the pinion angle θp is positive when it is an angle to the right of the neutral rack position, and is negative when it is an angle to the left of the neutral rack position. The turning motor 70 and the pinion shaft 62 operate in conjunction with each other via the speed reduction mechanism 66. Therefore, there is a one-to-one correspondence between a cumulative value of the rotation angle θb of the turning motor 70 and the pinion angle θp. The pinion angle θp can be obtained from the rotation angle θb of the turning motor 70 using this correspondence. The pinion shaft 62 meshes with the steered shaft 50. Therefore, there is also a one-to-one correspondence between the pinion angle θp and the amount of movement of the steered shaft 50. There is also a one-to-one correspondence between the pinion angle θp and the steered angle of the steered wheels 54.

A target pinion angle calculation process M14 is a process of calculating a target pinion angle θp* using the steering angle θh and the vehicle speed V as inputs. The target pinion angle θp* is a target value of the pinion angle θp according to the operation of the steering wheel 22 by the driver. The target pinion angle calculation process M14 includes a process of variably setting a steering angle ratio Dr according to the vehicle speed V. Accordingly, the value of the target pinion angle θp* output through the target pinion angle calculation process M14 varies according to the vehicle speed V even when the input steering angle θh is the same.

For example, the target pinion angle calculation process M14 can be implemented by calculating the steering angle ratio Dr through a map calculation using map data stored in advance in the storage device 104. The map data has the steering angle θh and the vehicle speed V as input variables, and the steering angle ratio Dr as an output variable. The map data for the map calculation of the steering angle ratio Dr is an example of a control parameter for adjusting the behavior of the vehicle VC. The map data is, for example, information adjusted by a vehicle manufacturer etc. during a designing or manufacturing process depending on the type and specifications of the vehicle VC.

The map data is a data set of discrete values of the input variables and values of the output variable corresponding to the values of the input variables. The map calculation may be a process in which, when the values of the input variables match any of the values of the input variables in the map data, a corresponding value of the output variable in the map data is output as a calculation result. The map calculation may be a process in which, when the values of the input variables do not match any of the values of the input variables in the map data, a value obtained by interpolating a plurality of values of the output variable included in the map data is output as a calculation result. Alternatively, the map calculation may be a process in which, when the values of the input variables do not match any of the values of the input variables in the map data, the value of the output variable in the map data that corresponds to the values of the input variables in the map data closest to the values of the input variables, out of the plurality of values of the output variable included in the map data, is output as a calculation result.

A pinion angle feedback process M16 is a process of calculating a turning torque command value Tt* to control the pinion angle θp to the target pinion angle θp* by feedback control. The turning torque command value Tt* is a command value for the torque of the turning motor 70. That is, the pinion angle feedback process M16 is a feedback process of calculating the turning torque command value Tt* by executing feedback control such that the pinion angle θp reaches the target pinion angle θp*. In the present embodiment, the pinion angle θp is an example of a state variable, the target pinion angle θp* is an example of a target control value, and the turning torque command value Tt* is an example of a feedback control value.

For example, the pinion angle feedback process M16 can be implemented by an angle feedback process for the pinion angle θp by PID control. The angle feedback process includes a process of multiplying an angle deviation Δθp that is a value obtained by subtracting the pinion angle θp from the target pinion angle θp* by an angle proportional gain. The angle feedback process includes a process of adding a value obtained by multiplying the angle deviation Δθp by an angle integral gain. The angle feedback process includes a process of multiplying the first-order time derivative of the angle deviation Δθs by an angle derivative gain. The feedback gains that are the angle proportional gain, the angle integral gain, and the angle derivative gain used in the angle feedback process are examples of a control parameter for adjusting the behavior of the steering actuator Act, that is, the turning actuator At. The feedback gains are, for example, information adjusted by a supplier manufacturer etc. during a designing or manufacturing process with a view to ensuring the responsiveness and control stability of the steering actuator Act and the turning actuator At. Particularly in the case of the vehicle steering system STG, the pinion angle feedback process M16 is required to be a highly responsive process. Therefore, it is necessary to ensure the control stability while ensuring high responsiveness.

A steering operation process M18 is a process of outputting the operation signal MSt for the turning inverter 72 using the turning torque command value Tt*, the currents iu2, iv2, iw2, and the rotation angle θb as inputs. The steering operation process M18 includes a process of calculating dq-axis current command values It* as target currents based on the turning torque command value Tt*. The steering operation process M18 includes a process of calculating dq-axis currents It as actual turning currents based on the currents iu2, iv2, iw2 and the rotation angle θb. The steering operation process M18 includes a process of calculating the operation signal MSt to control the driving of the turning inverter 72 such that the dq-axis currents It reach the current command values It*. That is, the steering operation process M18 is a feedback process of calculating the operation signal MSt by executing feedback control such that the dq-axis currents It reach the current command values It*. In the present embodiment, the dq-axis currents It are examples of the state variable, the current command values It* are examples of the target control value, and the operation signal MSt is an example of the feedback control value.

For example, the steering operation process M18 can be implemented by a current feedback process for the dq-axis currents It by PID control. The current feedback process includes a process of multiplying a current deviation ΔIt that is a value obtained by subtracting the dq-axis currents It from the current command values It* by a current proportional gain. The current feedback process includes a process of adding a value obtained by multiplying the current deviation ΔIt by a current integral gain. The current feedback process includes a process of multiplying the first-order time derivative of the current deviation ΔIt by a current derivative gain. The feedback gains that are the current proportional gain, the current integral gain, and the current derivative gain used in the current feedback process are examples of the control parameter for adjusting the behavior of the steering actuator Act, that is, the turning actuator At. The feedback gains are, for example, information adjusted by a supplier manufacturer etc. during a designing or manufacturing process with a view to ensuring the responsiveness and control stability of the steering actuator Act and the turning actuator At. Particularly in the case of the vehicle steering system STG, the steering operation process M18 is required to be a highly responsive process. Therefore, it is necessary to ensure the control stability while ensuring high responsiveness.

An axial force calculation process M19 includes a process of calculating an axial force Taf using the turning torque command value Tt* as an input. The axial force Taf is a force in the axial direction that is applied to the steered shaft 50. Instead of using the turning torque command value Tt* as the input, the axial force calculation process M19 may use the current command values It* or the dq-axis currents It as the input.

A base target torque calculation process M20 is a process of calculating, based on the axial force Taf, base target torque Thb* that is a base value of target steering torque Th* to be input to the steering shaft 24 by the driver via the steering wheel 22. Since the axial force Taf is a quantity according to a lateral force acting on the steered wheels 54, the lateral force can be known from the axial force Taf. It is desirable that torque to be input to the steering shaft 24 by the driver via the steering wheel 22 be determined according to the lateral force. Therefore, the base target torque calculation process M20 is a process of calculating the base target torque Thb* according to the lateral force known from the axial force Taf.

More specifically, the base target torque calculation process M20 is a process of variably setting an absolute value of the base target torque Thb* according to the vehicle speed V even when an absolute value of the axial force Taf is the same. This process may be a process of calculating the absolute value of the base target torque Thb* such that the absolute value of the base target torque Thb* when the vehicle speed V is small is equal to or less than the absolute value of the base target torque Thb* when the vehicle speed V is large. The base target torque calculation process M20 includes a process of variably setting the absolute value of the base target torque Thb* according to the system state variable SVcs. Accordingly, the value of the base target torque Thb* output through the base target torque calculation process M20 varies according to the system state variable SVcs even when the absolute value of the axial force Taf is the same. That is, the base target torque calculation process M20 is a process for enabling the vehicle steering system STG to cooperate with the other vehicle systems CS.

For example, the base target torque calculation process M20 can be implemented by calculating the base target torque Thb* through a map calculation using map data stored in advance in the storage device 104. The map data has the axial force Taf or a lateral acceleration known from the axial force Taf and the vehicle speed V as input variables, and the base target torque Thb* as an output variable. The map data for the map calculation of the base target torque Thb* is a basic parameter that defines the basic characteristics of the steering reaction force, and is an example of the control parameter for adjusting the behavior of the vehicle VC. The map data is, for example, information adjusted by a vehicle manufacturer etc. during a designing or manufacturing process depending on the type and specifications of the vehicle VC.

A compensation amount calculation process M21 is a process of calculating and outputting a compensation amount Thr for compensating for the base target torque Thb* based on the steering angle θh. More specifically, the compensation amount calculation process M21 includes a process of calculating the compensation amount Thr by identifying turning and returning of the steering wheel 22 based on changes in steering angle θh, etc. More specifically, the compensation amount calculation process M21 includes a process of calculating the compensation amount Thr such that the absolute value of the target steering torque Th* is larger when turning than when returning. The compensation amount calculation process M21 includes a process of variably setting the compensation amount Thr according to the vehicle speed V. The compensation amount calculation process M21 includes a process of variably setting the compensation amount Thr according to the system state variable SVcs. Accordingly, the value of the compensation amount Thr output through the compensation amount calculation process M21 varies according to the system state variable SVcs even when the situation of identification based on the changes in steering angle θh, etc. and the vehicle speed V are the same. That is, the compensation amount calculation process M21 is a process for enabling the vehicle steering system STG to cooperate with the other vehicle systems CS.

For example, the compensation amount calculation process M21 can be implemented by calculating the compensation amount Thr through multiplication by a gain variably set according to the system state variable SVcs. The gain for calculating the compensation amount Thr is a compensation parameter for compensating for the basic characteristics of the steering reaction force, and is an example of the control parameter for adjusting the behavior of the vehicle VC. The gain is, for example, information adjusted by a vehicle manufacturer etc. during a designing or manufacturing process depending on the type and specifications of the vehicle VC.

An addition process M22 is a process of calculating the target steering torque Th* by adding the compensation amount Thr to the base target torque Thb*. A target reaction force calculation process M23 is a process of calculating a target reaction force Ts* according to the steering reaction force to be applied to the steering wheel 22, using the steering torque Th and the target steering torque Th* as inputs. The target reaction force Ts* is actually a command value for the torque of the reaction force motor 30. The steering reaction force is a value obtained by multiplying the target reaction force Ts* by a coefficient according to the reduction ratio of the speed reduction mechanism 26. The target reaction force calculation process M23 includes a process of calculating the target reaction force Ts* such that the steering torque Th reaches the target steering torque Th*.

For example, the target reaction force calculation process M23 can be implemented by a torque feedback process for the steering torque Th by PID control. The torque feedback process includes a process of multiplying a torque deviation ΔTh that is a value obtained by subtracting the target steering torque Th* from the steering torque Th by a torque proportional gain. The torque feedback process includes a process of adding a value obtained by multiplying the torque deviation ΔTh by a torque integral gain. The torque feedback process includes a process of multiplying the first-order time derivative of the torque deviation ΔTh by a torque derivative gain. The feedback gains that are the torque proportional gain, the torque integral gain, and the torque derivative gain used in the torque feedback process are examples of the control parameter for adjusting the behavior of the vehicle VC. The feedback gains are, for example, information adjusted by a vehicle manufacturer etc. during a designing or manufacturing process depending on the type and specifications of the vehicle VC.

A reaction force operation process M24 is a process of outputting the operation signal MSs for the reaction force inverter 32 using the target reaction force Ts*, the currents iu1, iv1, iw1, and the rotation angle θa as inputs. The reaction force operation process M24 includes a process of calculating dq-axis current command values Is* as target currents based on the target reaction force Ts*. The reaction force operation process M24 includes a process of calculating dq-axis currents Is as actual currents based on the currents iu1, iv1, iw1 and the rotation angle θa. The reaction force operation process M24 includes a process of calculating the operation signal MSs to control the driving of the reaction force inverter 32 such that the dq-axis currents Is reach the current command values Is*. That is, the reaction force operation process M24 is a feedback process of calculating the operation signal MSs by executing feedback control such that the dq-axis currents Is reach the current command values Is*. In the present embodiment, the dq-axis currents Is are examples of the state variable, the current command values Is* are examples of the target control value, and the operation signal MSs is an example of the feedback control value.

For example, the reaction force operation process M24 can be implemented by a current feedback process for the dq-axis currents Is by PID control. The current feedback process includes a process of multiplying a current deviation ΔIs that is a value obtained by subtracting the dq-axis currents Is from the current command values Is* by a current proportional gain. The current feedback process includes a process of adding a value obtained by multiplying the current deviation ΔIs by a current integral gain. The current feedback process includes a process of multiplying the first-order time derivative of the current deviation ΔIs by a current derivative gain. The feedback gains that are the current proportional gain, the current integral gain, and the current derivative gain used in the current feedback process are examples of the control parameter for adjusting the behavior of the steering actuator Act, that is, the reaction force actuator Ar. The feedback gains are, for example, information adjusted by a supplier manufacturer etc. during a designing or manufacturing process with a view to ensuring the responsiveness and control stability of the steering actuator Act and the reaction force actuator Ar. Particularly in the case of the vehicle steering system STG, the reaction force operation process M24 is required to be a highly responsive process. Therefore, it is necessary to ensure the control stability while ensuring high responsiveness. This is similar to the steering operation process M18.

### <Assignment of Processes for Controlling Vehicle Steering System>

As shown in FIG. 3, each process to be executed to control the vehicle steering system STG is assigned to be executed by either the integrated control device 10 or the steering control device 20.

More specifically, the steering angle calculation process M10 and the target pinion angle calculation process M14 are processes assigned to be executed by the integrated control device 10. Each of the processes M10, M14 is a turning servo target value calculation process of calculating the target pinion angle θp* for calculating the turning torque command value Tt* related to the driving of the turning motor 70, that is, the operation signal MSt. In the present embodiment, the turning servo target value calculation process is an example of a first control process. That is, the target pinion angle θp* is an example of a steering control value.

The axial force calculation process M19, the base target torque calculation process M20, the compensation amount calculation process M21, the addition process M22, and the target reaction force calculation process M23 are processes assigned to be executed by the integrated control device 10. Each of the processes M19, M20, M21, M22, M23 is a reaction force servo target value calculation process of calculating the target reaction force Ts* that is a control value for calculating the operation signal MSs related to the driving of the reaction force motor 30. In the present embodiment, the reaction force servo target value calculation process is an example of the first control process. That is, the target reaction force Ts* is an example of the steering control value.

The pinion angle calculation process M12, the pinion angle feedback process M16, and the steering operation process M18 are processes assigned to be executed by the steering control device 20. Each of the processes M12, M16, M18 is a turning servo control process of controlling the driving of the turning motor 70, that is, the turning actuator At, to reflect the target pinion angle θp*. In the present embodiment, the turning servo control process is an example of a second control process.

The reaction force operation process M24 is a process assigned to be executed by the steering control device 20. The reaction force operation process M24 is a reaction force servo control process of controlling the driving of the reaction force motor 30, that is, the reaction force actuator Ar, to reflect the target reaction force Ts*. In the present embodiment, the reaction force servo control process is an example of the second control process.

### <Integrated Control Program and Steering Control Program>

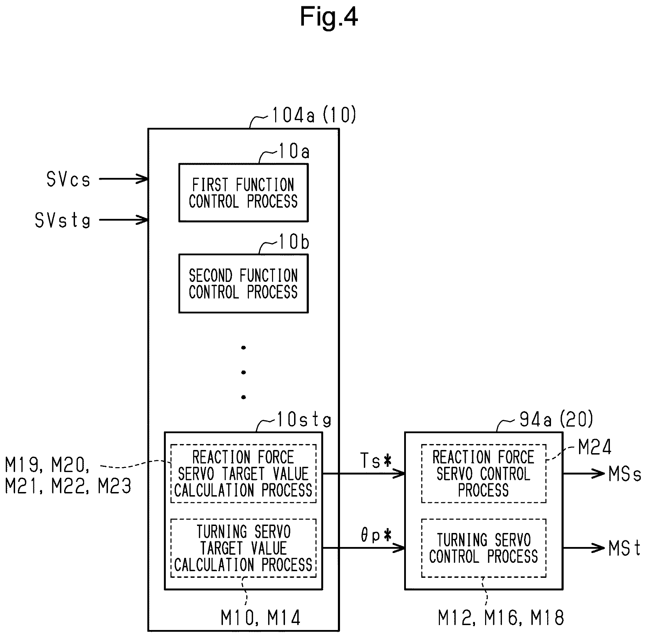

As shown in FIG. 4, in the integrated control device 10, the integrated control program 104a of the control unit 102 includes the steering control process 10stg. In addition, the integrated control program 104a not only includes the first function control process 10a and the second function control process 10b, but also includes control processes for controlling the other vehicle systems CS. The steering control process 10stg includes the turning servo target value calculation process (M10, M14) and the reaction force servo target value calculation process (M19, M20, M21, M22, M23) among the processes to be executed to control the vehicle steering system STG. That is, the integrated control device 10 can only allocate part of the overall resources to the turning servo target value calculation process and the reaction force servo target value calculation process.

In the steering control device 20, the steering control program 94a includes the turning servo control process (M12, M16, M18) and the reaction force servo control process (M24) among the processes to be executed to control the vehicle steering system STG. That is, the steering control device 20 can allocate all of the resources to the turning servo control process and the reaction force servo control process.

Therefore, the integrated control device 10 executes the turning servo target value calculation process based on the integrated control program 104a to calculate the target pinion angle θp* to be used to control the vehicle steering system STG. The integrated control device 10 executes the reaction force servo target value calculation process based on the integrated control program 104a to calculate the target reaction force Ts* to be used to control the vehicle steering system STG. When executing these processes, the integrated control device 10 refers to the steering state variable SVstg and the system state variable SVcs transmitted via the in-vehicle network GC. The integrated control device 10 outputs the calculated target pinion angle θp* and the calculated target reaction force Ts* to the in-vehicle network GC.

The steering control device 20 receives input of the target pinion angle θp* and the target reaction force Ts* transmitted via the in-vehicle network GC. When the target pinion angle θp* is input, the steering control device 20 executes the turning servo control process based on the steering control program 94a to calculate the operation signal MSt. That is, the steering control device 20 controls the driving of the turning motor 70 to control the turning actuator At. When the target reaction force Ts* is input, the steering control device 20 executes the reaction force servo control process based on the steering control program 94a to calculate the operation signal MSs. That is, the steering control device 20 controls the driving of the reaction force motor 30 to control the reaction force actuator Ar.

The integrated control device 10 executes the first function control process 10a based on the integrated control program 104a to calculate a first function control value CSa* to be used to control the first vehicle function system CSa. When executing this process, the integrated control device 10 refers to the steering state variable SVstg and the system state variable SVcs transmitted via the in-vehicle network GC. The integrated control device 10 outputs the calculated first function control value CSa* to the in-vehicle network GC. The first function control device 14a can control the first function actuator 12a by receiving input of the first function control value CSa* transmitted via the in-vehicle network GC. That is, the integrated control device 10 enables the first vehicle function system CSa to cooperate with the other vehicle systems CS. The same applies to the other vehicle systems CS including the second vehicle function system CSb. For example, the integrated control device 10 executes the second function control process 10b based on the integrated control program 104a to calculate a second function control value CSb* to be used to control the second vehicle function system CSb.

### <Functions of Embodiment>

As shown in FIGS. 3 and 4, the turning servo target value calculation process (M10, M14) and the reaction force servo target value calculation process (M19, M20, M21, M22, M23) are assigned as the processes to be executed by the integrated control device 10. The integrated control device 10 can adjust the behavior of the vehicle VC, for example, by adjusting the map data for the map calculation of the steering angle ratio Dr in the target pinion angle calculation process M14. The integrated control device 10 can adjust the behavior of the vehicle VC, for example, by adjusting the map data for the map calculation of the base target torque Thb* in the base target torque calculation process M20. The integrated control device 10 can adjust the behavior of the vehicle VC, for example, by adjusting the gain for calculating the compensation amount Thr in the compensation amount calculation process M21. The integrated control device 10 can adjust the behavior of the vehicle VC, for example, by adjusting the feedback gains for calculating the target reaction force Ts* in the target reaction force calculation process M23. That is, when adjusting the behavior of the vehicle VC, it is sufficient to adjust the control parameters to be used in the processes M14, M20, M21, M23 executed by the integrated control device 10.

The turning servo control process (M12, M16, M18) and the reaction force servo control process (M24) are assigned as the processes to be executed by the steering control device 20. The steering control device 20 can adjust the behavior of the turning actuator At, for example, by adjusting the feedback gains in the pinion angle feedback process M16. The steering control device 20 can adjust the behavior of the turning actuator At, for example, by adjusting the feedback in the steering operation process M18. The steering control device 20 can adjust the behavior of the reaction force actuator Ar, for example, by adjusting the feedback gains in the reaction force operation process M24. That is, when adjusting the behaviors of the turning actuator At and the reaction force actuator Ar, it is sufficient to adjust the control parameters to be used in the processes M16, M18, M24 executed by the steering control device 20.

Thus, it is possible to separately carry out the work related to the adjustment of the behavior of the vehicle VC and the work related to the adjustment of the behaviors of the turning actuator At and the reaction force actuator Ar.

### <Effects of Embodiment>

(1-1) For example, a vehicle manufacturer etc. can independently adjust the behavior of the vehicle VC during a designing or manufacturing process depending on the type and specifications of the vehicle VC. For example, a supplier manufacturer etc. can independently adjust the behavior of the vehicle steering system STG during a designing or manufacturing process with a view to ensuring the responsiveness and control stability of the turning actuator At and the reaction force actuator Ar. This facilitates the work related to the adjustment of the behaviors of the vehicle VC and the vehicle steering system STG. This is effective in improving the degree of freedom in designing the vehicle control system CCS.
(1-2) The adjustment of the control parameter to be used in the base target torque calculation process M20 executed by the integrated control device 10 enables easy optimization of the output characteristics of the steering reaction force. This is effective in, for example, achieving a desired behavior of the vehicle VC in a vehicle manufacturer etc.
(1-3) The adjustment of the control parameter to be used in the compensation amount calculation process M21 executed by the integrated control device 10 enables more specific optimization of the output characteristics of the steering reaction force. This is effective in diversifying the behavior of the vehicle VC that can be achieved.
(1-4) The adjustment of the control parameters to be used in the pinion angle feedback process M16 and the steering operation process M18 executed by the steering control device 20 enables optimization of the responsiveness of the turning actuator At. The adjustment of the control parameter to be used in the reaction force operation process M24 executed by the steering control device 20 enables optimization of the responsiveness of the reaction force actuator Ar. This is effective in, for example, achieving a desired behavior of the vehicle steering system STG in a supplier manufacturer etc.
(1-5) The integrated control device 10 can be assigned to execute processes specialized for achieving cooperation with the other vehicle systems CS among the processes to be executed to control the vehicle steering system STG. That is, the integrated control device 10 can allocate the resources for cooperation with the other vehicle systems CS.

The steering control device 20 can be assigned to execute processes specialized for controlling the turning actuator At and the reaction force actuator Ar among the processes to be executed to control the vehicle steering system STG. That is, the steering control device 20 can allocate the resources to improve the responsiveness of the turning actuator At and the reaction force actuator Ar.

The present embodiment devises the assignment of the processes related to cooperation with the other vehicle systems CS and the processes related to improvement in responsiveness of the turning actuator At and the reaction force actuator Ar to the integrated control device 10 and the steering control device 20. Therefore, the steering control device 20 can easily execute highly responsive control as the control on the vehicle steering system STG. Thus, it is possible to appropriately achieve both high performance of the vehicle steering system STG and improved compatibility with the other vehicle systems CS.

(1-6) The turning servo control process (M12, M16, M18) to be executed by the steering control device 20 implements control that basically refers to information obtained from the turning actuator At, except for the target pinion angle θp*. The information obtained from the turning actuator At is the state variables such as the rotation angle θb and the currents iu2, iv2, iw2. Therefore, in the turning servo control process, the time required to obtain necessary information is shorter than in a case where information is obtained from, for example, other vehicle systems CS. Thus, the steering control device 20 can appropriately execute highly responsive control as the control on the turning actuator At. The effect described here also applies to the reaction force servo control process (M24) to be executed by the steering control device 20.

(1-7) In controlling the driving of the reaction force motor 30 and the turning motor 70 that constitute the vehicle steering system STG, control adaptable to high responsiveness is generally required. The steering control device 20 can appropriately execute highly responsive control as the control on the reaction force actuator Ar and the turning actuator At, and can therefore appropriately meet the above requirement.

(1-8) The turning servo control process and the reaction force servo control process each include the current feedback process (M18, M24). The turning servo control process further includes the angle feedback process (M16). That is, the turning servo control process and the reaction force servo control process include the feedback processes, and the feedback processes are assigned to be executed by the steering control device 20. This is effective in implementing the highly responsive control required for the turning servo control process and the reaction force servo control process.

(1-9) The control period of the steering control device 20 is shorter than the control period of the integrated control device 10. The communication period of the in-vehicle network GC is shorter than the control period of the integrated control device 10 and longer than the control period of the steering control device 20. This is effective in easily implementing highly responsive control as the control on the driving of the reaction force actuator Ar and the turning actuator At.

### <Second Embodiment>

A second embodiment will be described below with reference to the drawings, focusing on differences from the first embodiment. For convenience of description, the same configurations as those in the first embodiment are denoted by the same signs as those in the first embodiment, and description thereof will be omitted.

As indicated by the long dashed double-short dashed line in FIG. 2, the vehicle steering system STG of the present embodiment includes a steering device in which the steering wheel 22 and the steered wheels 54 are mechanically connected. That is, the end of the steering shaft 24 opposite to the end to which the steering wheel 22 is connected and the end of the pinion shaft 62 opposite to the end to which the steered shaft 50 is connected are mechanically connected. For example, the steering actuator Act does not include the reaction force actuator Ar and is composed only of the turning actuator At. That is, the steering actuator Act is an actuator for applying an assist force to the steering wheel 22.

### <Processes for Controlling Vehicle Steering System>

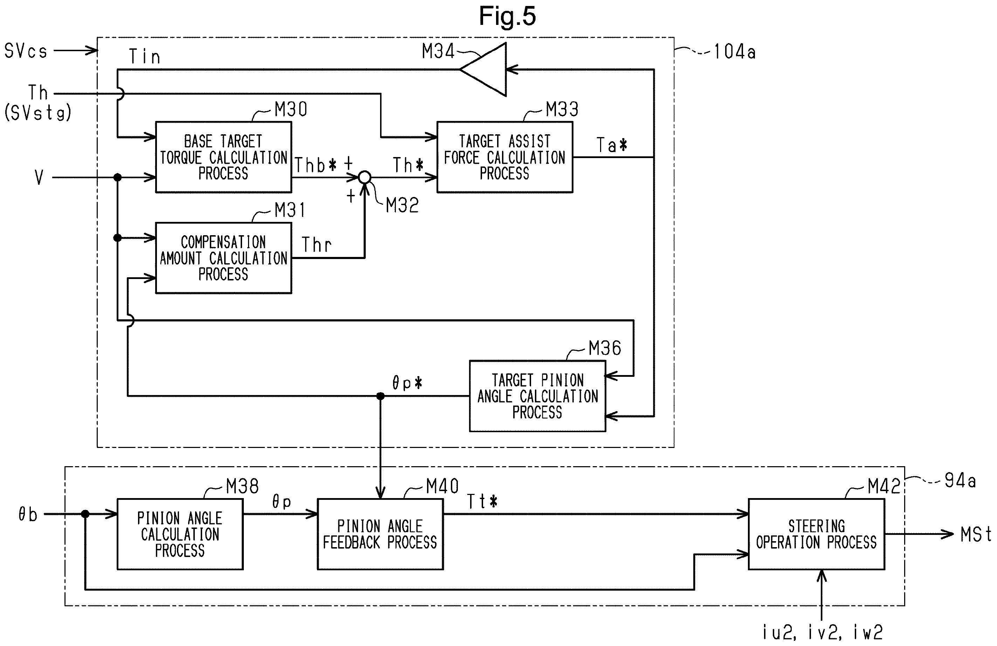

FIG. 5 shows part of the processes to be executed to control the vehicle steering system STG of the present embodiment.

A base target torque calculation process M30 is the same as the base target torque calculation process M20 in the first embodiment, except that input torque Tin is input instead of the axial force Taf. A compensation amount calculation process M31 is the same as the compensation amount calculation process M21 in the first embodiment, except that the target pinion angle θp* is input instead of the steering angle θh. An addition process M32 is the same as the addition process M22 in the first embodiment. A target assist force calculation process M33 is the same as the target reaction force calculation process M23 in the first embodiment, except that a target assist force Ta* is output instead of the target reaction force Ts*.

More specifically, an assist force calculation process M34 includes a process of calculating the input torque Tin using the target assist force Ta* as an input. The input torque Tin is motor torque of the turning motor 70 to be applied to the steering shaft 24. Since the input torque Tin is a quantity according to a lateral force acting on the steered wheels 54, the lateral force can be known from the input torque Tin.

The base target torque calculation process M30 is a process of calculating, based on the input torque Tin, the base target torque Thb* that is a base value of the target steering torque Th* to be input to the steering shaft 24 by the driver via the steering wheel 22.

The target assist force calculation process M33 is a process of calculating the target assist force Ta* according to the assist force to be applied to the steering shaft 24, using the steering torque Th and the target steering torque Th* as inputs. The target assist force calculation process M33 includes a process of calculating the target assist force Ta* such that the steering torque Th reaches the target steering torque Th*.

A target pinion angle calculation process M36 is a process of calculating the target pinion angle θp* using the target assist force Ta* and the vehicle speed V as inputs. The target pinion angle calculation process M36 includes a process of calculating the target pinion angle θp* from the input torque Tin based on a reference model. The reference model is a mathematical expression of the relationship of an ideal pinion angle θp according to the input torque Tin, based on the steering device in which the steering wheel 22 and the steered wheels 54 are mechanically connected. For example, the reference model includes a viscosity term related to a viscosity coefficient that models the friction of the steering device, etc. The reference model also includes an inertia term related to an inertia coefficient that models the inertia of the steering device. The reference model also includes a spring term related to a spring constant modeled by regarding the specifications of the suspension, wheel alignment, etc. of the vehicle including the steering device as springs.

For example, the target pinion angle calculation process M36 can be implemented by calculating the viscosity term, the inertia term, and the spring term using map data stored in advance in the storage device 104. The map data has the input torque Tin and the vehicle speed V as input variables, and the viscosity term, the inertia term, and the spring term as output variables. The map data for the map calculation of the viscosity term, the inertia term, and the spring term is an example of the control parameter for adjusting the behavior of the vehicle VC. The map data is, for example, information adjusted by a vehicle manufacturer etc. during a designing or manufacturing process depending on the type and specifications of the vehicle VC.

A pinion angle calculation process M38 is the same as the pinion angle calculation process M12 in the first embodiment. A pinion angle feedback process M40 is the same as the pinion angle feedback process M16 in the first embodiment, except that the target pinion angle θp* calculated in the target pinion angle calculation process M36 is input instead of the target pinion angle calculated in the target pinion angle calculation process M14. A steering operation process M42 is the same as the steering operation process M18 in the first embodiment.

### <Assignment of Processes for Controlling Vehicle Steering System>

As shown in FIG. 5, each process to be executed to control the vehicle steering system STG of the present embodiment is assigned to be executed by either the integrated control device 10 or the steering control device 20.

More specifically, the base target torque calculation process M30, the compensation amount calculation process M31, the addition process M32, the target assist force calculation process M33, the assist force calculation process M34, and the target pinion angle calculation process M36 are processes assigned to be executed by the integrated control device 10. Each of the processes M30, M31, M32, M33, M34, M36 is the turning servo target value calculation process of calculating the target pinion angle θp*.

The pinion angle calculation process M38, the pinion angle feedback process M40, and the steering operation process M42 are processes assigned to be executed by the steering control device 20. Each of the processes M38, M40, M42 is the turning servo control process of controlling the driving of the turning motor 70, that is, the turning actuator At.

The second embodiment described above has effects according to those of the first embodiment.

### <Other Embodiments>

Each of the above embodiments can be modified as follows. The above embodiments and the following other embodiments can be combined unless technical contradictions arise.
- In the first embodiment, the target reaction force Ts* may be calculated based on the steering torque Th and the vehicle speed V. For example, the absolute value of the calculated target reaction force Ts* increases as the absolute value of the steering torque Th increases and as the vehicle speed V decreases. In the other embodiment described here, the reaction force servo control process to be executed by the steering control device 20 may include a phase compensation process for adjusting the response delay of the operation of the steering wheel 22 in response to changes in steering torque Th. For example, the phase compensation process can be implemented by executing a filtering process to advance the phase of the target reaction force Ts*. A filter constant such as a cutoff frequency of the filtering process is an example of the control parameter for adjusting the behavior of the reaction force actuator Ar. The filter constant is, for example, information adjusted by a supplier manufacturer etc. during a designing or manufacturing process with a view to ensuring the responsiveness and control stability of the steering actuator Act. That is, when adjusting the behavior of the reaction force actuator Ar, it is sufficient to adjust, for example, the control parameter to be used in the phase advancing compensation process executed by the steering control device 20. The phase compensation process may include a process of delaying the phase of the steering torque Th to adjust the frequency characteristics of a phase difference that occurs in response to torsion of the steering shaft 24 for the steering torque Th. The same applies to the second embodiment in which the vehicle steering system STG includes the steering device in which the steering wheel 22 and the steered wheels 54 are mechanically connected. For example, this can be implemented by executing a filtering process to advance the phase of the target assist force Ta*.
- In the first embodiment, the reaction force servo control process to be executed by the steering control device 20 may include an angle feedback process as in the turning servo control process. This angle feedback process may be, for example, a process of calculating a reaction force operation amount to control the steering angle θh to a target steering angle θh*. The target steering angle θh* is calculated, for example, using the above reference model. In the other embodiment described here, the angle feedback process can be implemented, for example, by an angle feedback process for the steering angle θh by PID control as in the pinion angle feedback process M16. That is, the steering control device 20 can adjust the behavior of the steering actuator Act, that is, the reaction force actuator Ar, for example, by adjusting the feedback gains in the angle feedback process for the steering angle θh.
- In the first embodiment, the steering angle calculation process M10 may be included in the reaction force servo control process or the turning servo process to be executed by the steering control device 20. In this case, the steering control device 20 may output the steering angle θh calculated in the steering angle calculation process M10 to the in-vehicle network GC. That is, the steering state variable SVstg includes the steering angle θh calculated by the steering control device 20.
- In the first embodiment, the processes to be executed to control the vehicle steering system STG may include at least the base target torque calculation process M20. That is, the compensation amount calculation process M21 may be omitted. The other embodiment described here can similarly be applied to the second embodiment.
- In the first embodiment, the compensation amount calculation process M21 compensates for the hysteresis characteristic of the target steering torque Th*, but may compensate for other characteristics. The other embodiment described here can similarly be applied to the second embodiment.
- In the first embodiment, the processes to be executed to control the vehicle steering system STG may include a process of calculating and outputting a target compensation amount for compensating for the target reaction force Ts*. The target compensation amount may be, for example, for compensation for the return movement of the steering wheel 22 to the neutral steering position. The target compensation amount may be, for example, for compensation for reducing micro-vibrations occurring in the steering wheel 22. The target compensation amount may be, for example, for compensation for suppressing a feeling of sticking when starting to steer the steering wheel 22 and a feeling of slippage when finishing steering the steering wheel 22. The target compensation amount may variably be set according to the system state variable SVcs. The gains etc. to be used to calculate the target compensation amount are examples of the control parameter for adjusting the behavior of the vehicle VC. The other embodiment described here can similarly be applied to the second embodiment. For example, the processes may include a process of calculating and outputting a target compensation amount for compensating for the target assist force Ta*.
- In the first embodiment, the pinion angle feedback process M16 may include a process of variably setting the feedback gains according to the vehicle speed V. In this case, the feedback gains may be calculated by the integrated control device 10 according to the vehicle speed V and output to the in-vehicle network GC. That is, the steering control device 20 may variably set the feedback gains in the pinion angle feedback process M16 by receiving input of the feedback gains transmitted via the in-vehicle network GC. The same applies to the feedback gains in the steering operation process M18 and the reaction force operation process M24. The other embodiment described here can similarly be applied to the pinion angle feedback process M40 of the second embodiment. The same applies to the steering operation process M42.
- In the first embodiment, the target reaction force calculation process M23 may be, for example, a torque feedback process by PI control or PD control. The target reaction force Ts* may be calculated by open-loop control. An open-loop gain for the open-loop control is an example of the control parameter for adjusting the behavior of the vehicle VC. The other embodiment described here can similarly be applied to the target assist force calculation process M33 of the second embodiment.
- In the first embodiment, the pinion angle feedback process M16 may be, for example, an angle feedback process by PI control or PD control. The target pinion angle θp* may be calculated by open-loop control. An open-loop gain for the open-loop control is an example of the control parameter for adjusting the behavior of the steering actuator Act, that is, the turning actuator At. The other embodiment described here can similarly be applied to the pinion angle feedback process M40 of the second embodiment.
- In the first embodiment, the steering operation process M18 may be, for example, a current feedback process by PI control or PD control. The same applies to the reaction force operation process M24. The other embodiment described here can similarly be applied to the steering operation process M42 of the second embodiment.
- The second embodiment may similarly be applied to a case where the steering actuator Act is composed only of the reaction force actuator Ar without the turning actuator At. In this case, the turning servo control process to be executed by the steering control device 20 may be changed to a steering servo control process of controlling the steering angle θh to the target steering angle θh*. For example, the steering servo control process may include an angle feedback process as in the turning servo control process. The target steering angle θh* is calculated, for example, using the above reference model.
- In the second embodiment, the compensation amount calculation process M31 may use the pinion angle θp as an input instead of the target pinion angle θp*. In the other embodiment described here, the steering state variable SVstg includes the pinion angle θp.
- In each of the above embodiments, the software processing device used in the control unit 102 may have, for example, a control period shorter than or approximately equal to the communication period of the in-vehicle network GC. That is, the control period of the control unit 92 may be longer than or approximately equal to the control period of the control unit 102.
- In the first embodiment, the torque sensor 80 and the rotation angle sensor 82 may directly be connected to the in-vehicle network GC, or may directly be connected to the integrated control device 10. In the second embodiment, the torque sensor 80 may directly be connected to the in-vehicle network GC, or may directly be connected to the integrated control device 10. That is, the method for acquiring information required for the processing by the integrated control device 10 is not limited to the methods described in the above embodiments.
- In the first embodiment, the method for controlling each motor 30, 70 is not limited to the current feedback process. For example, in the case where a direct current motor is used as each motor 30, 70 and an H-bridge circuit is used as the drive circuit, a current that flows through each motor 30, 70 may be controlled. The other embodiment described here can similarly be applied to the turning motor 70 of the second embodiment.
- In the first embodiment, the amount of displacement of the steering wheel 22 is not limited to the amount calculated based on the integration process for the rotation angle θa. For example, this may be a detected value of a steering angle sensor that directly detects the rotation angle of the steering shaft 24. The steering angle sensor may be provided, for example, on the steering shaft 24 between the steering wheel 22 and the torque sensor 80.
- In the first embodiment, the base target torque calculation process M20 is not limited to the process that uses the vehicle speed V as an input in addition to the axial force Taf. It is not essential to calculate the base target torque Thb* using the axial force Taf as an input. For example, the base target torque Thb* may be calculated using the steering torque Th and the vehicle speed V as inputs. The other embodiment described here can similarly be applied to the base target torque calculation process M30 of the second embodiment. For example, the base target torque Thb* may be calculated using a sum obtained by adding the steering torque Th to the input torque Tin and the vehicle speed V as inputs.
- In the first embodiment, a process of controlling a detected value of the amount of movement of the steered shaft 50 to a target value may be used instead of the pinion angle feedback process M16. In this case, the controlled variable for the pinion angle θp etc. in the above embodiment is replaced with a controlled variable for the amount of movement of the steered shaft 50 etc. The other embodiment described here can similarly be applied to the pinion angle feedback process M40 of the second embodiment.
- In each of the above embodiments, the operation member to be operated by the driver to steer the vehicle VC is not limited to the steering wheel 22. For example, the operation member may be a joystick.
- In the first embodiment, the speed reduction mechanism 26 need not necessarily be provided.
   - In each of the above embodiments, the integrated control device 10 is not limited to the control device that includes the control unit 102 and the storage device 104 and that executes software processing. For example, the integrated control device 10 may include a dedicated hardware circuit such as an ASIC that executes at least part of the processes executed in the above embodiments. That is, the integrated control device 10 may include a processing circuit with any of the following configurations (a) to (c).
      (a) A processing circuit including: a processing device that executes all of the above processes according to a program; and a program storage device such as a storage device that stores the program.
      (b) A processing circuit including: a processing device that executes part of the above processes according to a program; a program storage device; and a dedicated hardware circuit that executes the rest of the processes.
      (c) A processing circuit including a dedicated hardware circuit that executes all of the above processes.
      The number of software execution devices including a processing device and a program storage device may be two or more. The number of dedicated hardware circuits may be two or more. The other embodiment described here can similarly be applied to the steering control device 20.
- In each of the above embodiments, for example, an actuator in which the turning motor 70 is disposed coaxially with the steered shaft 50 may be used as the turning actuator At. Alternatively, for example, an actuator connected to the steered shaft 50 via a belt speed reducer using a ball screw mechanism may be used as the turning actuator At.
- In the first embodiment, the vehicle steering system STG may include a steering device in which the steering wheel 22 and the steered wheels 54 are mechanically connected in a separable manner by a clutch.
- In each of the above embodiments, the turning actuator At is not limited to the one configured such that the right steered wheel 54 and the left steered wheel 54 operate in conjunction with each other. In other words, the turning actuator At may be configured to control the right steered wheel 54 and the left steered wheel 54 independently of each other.

## Claims

1. A vehicle control system configured to control a plurality of vehicle systems including a vehicle steering system for steering a vehicle, the vehicle control system comprising:
an integrated control device that centrally controls the plurality of vehicle systems; and
a steering control device that controls the vehicle steering system, wherein
processes of controlling the vehicle steering system include a first control process and a second control process,
the integrated control device is configured to execute the first control process,
the steering control device is configured to execute the second control process,
the first control process is a process of calculating a steering control value to be used by the steering control device to control the vehicle steering system, and is a process using a control parameter set in association with a behavior of the vehicle, and
the second control process is a process of controlling the vehicle steering system to reflect the steering control value calculated by the integrated control device, and is a process using a control parameter set in association with a behavior of the vehicle steering system.

2. The vehicle control system according to claim 1, wherein:
the vehicle steering system is a steering actuator using a motor as a drive source;
the control parameter to be used in the first control process is a parameter related to an output characteristic of a steering force output as a result of driving of the steering actuator; and
the control parameter to be used in the second control process is a parameter related to responsiveness of the steering actuator.

3. The vehicle control system according to claim 2, wherein the control parameter to be used in the first control process includes a basic parameter that defines a basic characteristic of the steering force.

4. The vehicle control system according to claim 3, wherein the control parameter to be used in the first control process includes a compensation parameter for compensating for the basic characteristic.

5. The vehicle control system according to any one of claims 2 to 4, wherein:
the second control process includes a process of controlling driving of a drive circuit of the motor;
the process of controlling the driving of the drive circuit of the motor includes
a feedback process of calculating a feedback control value by feedback control such that a state variable that changes through the driving of the steering actuator reaches a target control value obtained based on the steering control value, and
a process of controlling the driving of the drive circuit based on the feedback control value; and
the control parameter to be used in the second control process includes a feedback gain in the feedback process.

6. An integrated control program to be applied to a vehicle control system including an integrated control device that centrally controls a plurality of vehicle systems including a vehicle steering system for steering a vehicle, and a steering control device that controls the vehicle steering system,
processes of controlling the vehicle steering system including a first control process to be executed by the integrated control device and a second control process to be executed by the steering control device,
the integrated control program being configured to cause the integrated control device to execute the first control process, wherein
the first control process is a process of calculating a steering control value to be used by the steering control device to control the vehicle steering system, and is a process using a control parameter set in association with a behavior of the vehicle.

7. A vehicle steering system for steering a vehicle, the vehicle steering system being applied to a vehicle control system including an integrated control device that centrally controls a plurality of vehicle systems, the vehicle steering system comprising a steering control device that controls the vehicle steering system, wherein:
processes of controlling the vehicle steering system include a first control process to be executed by the integrated control device and a second control process to be executed by the steering control device;
the first control process is a process of calculating a steering control value to be used by the steering control device to control the vehicle steering system, and is a process using a control parameter set in association with a behavior of the vehicle; and
the second control process is a process of controlling the vehicle steering system to reflect the steering control value calculated by the integrated control device, and is a process using a control parameter set in association with a behavior of the vehicle steering system.
